# EUROPEAN PATENT SPECIFICATION

(11) **EP 2 141 432 B1**
(45) Date of publication and mention of the grant of the patent: **16.02.2011**
(21) Application number: 08380189.4
(22) Date of filing: 01.07.2008
(51) Int. Cl.: F28D 20/00

(54) **Dual thermal energy storage tank**
Dualwärmeenergiespeichertank
Double réservoir de stockage d'énergie thermique

(43) Date of publication of application: 06.01.2010
(73) Proprietor: SENER, INGENIERIA Y SISTEMAS, S.A., 48930 Las Arenas Guecho (Vizcaya) (ES)
(72) Inventor: Lata Pérez, Jesús Ma, 48014 Bilbao (ES); Blanco Lorenzo, Julio, 48015 Bilbao (ES)
(74) Representative: Carvajal y Urquijo, Isabel

(56) References cited:
- US-A- 4 182 489
- US-A- 4 501 262
- US-A- 4 523 629
- US-A- 5 823 177

## Description

### Technical field of the invention

The present invention generally relates to the field of thermal energy storage systems, and more particularly to the improvements in the design of thermocline storage tanks. A dual Thermal energy storage according to the preamble of claim 1 is known from US-4523 629.

### Background of the invention

Thermal energy storage systems are generally used in applications where it is necessary to decouple energy collection from energy delivery. Solar energy collection systems are a typical example of this, as there may normally exist a demand for energy during periods without solar radiation, when no energy can be collected, but energy has still to be delivered to satisfy said demand.

The size of solar energy collection systems may range from small domestic collector systems, used for heating water, to much larger collector systems, as those encountered in solar electric power plants.

One way of storing thermal energy consists of employing the sensible heat of a. fluid. During periods with solar radiation, thermal energy is stored by heating said fluid, so that upon cooling the fluid during periods without solar radiation thermal energy will be delivered to satisfy the energy demand during those periods, in which energy collection is not available.

A common design of a sensible heat storage system in solar power plants comprises two storage tanks, which hold a volume of thermal fluid. Each of the tanks contains said fluid at a different temperature, so that one of the tanks contains a volume of thermal fluid at a given "cold" temperature, and the other tank contains a volume of thermal fluid at a given hotter temperature.

During operation of the plant, in periods with solar radiation, thermal fluid is withdrawn from the cold tank and is heated using with thermal energy coming from the solar collector system, then pouring it into the hot tank. In periods with no solar radiation, thermal fluid is withdrawn from the hot tank, making it flow through a heat exchanger where it is cooled, thus providing the necessary thermal energy for electric power generation.

It must be noted that with the described storage system, each of the tanks has to be sized to hold the entire volume of the thermal fluid, so that the total storage capacity of the system is actually twice the total volume of the thermal storage fluid inventory of the plant.

In practice, the tanks of the storage system of a solar power plant can reach considerable sizes, and the need for the aforementioned "redundant" storage volume leads to several drawbacks in terms of fabrication costs of the additional tank, increased thermal losses of the storage system or the costs of the auxiliary equipment, piping, etc., associated with the additional tank.

So, it becomes desirable to eliminate the redundant volume from the storage system, and there are currently several approaches offering solutions to this problem. The most common solution is the thermocline tank, in which the entire volume of the thermal fluid is hold in a single tank. In this single tank, the two masses of cold and hot fluid are stored one atop the other, and the natural stratification or thermocline resulting from the difference in densities of the fluid at the two different temperatures keeps them substantially separated. That is, the cold fluid, which is normally denser than the hot fluid is stored below the hot fluid, and the buoyant forces resulting from this difference in densities helps to maintain the two masses of fluid separated, with a rather steep temperature change in the interface between them.

When thermal energy is being collected, cold fluid is extracted from the bottom of the tank and heated fluid is returned to the top of the tank, and when thermal energy has to be delivered hot fluid is retrieved from the top of the tank, and cold fluid is returned to the bottom of the tank.

As the quantity of the fluid at one of the temperatures being extracted from the tank is always essentially equal to the quantity of fluid that is introduced at the other temperature, the total mass of the stored fluid in the tank remains essentially constant through the whole operation cycle of the storage system. In this way, the single thermocline tank is always working at its full capacity (i.e., is full, or nearly full, of stored fluid), optimizing the storage efficiency.

However, several phenomena like the conductive heat transmission between the two masses of fluid, or the convective currents resulting from the combined effect of natural stratification and edge energy losses of the tank can significantly degrade the vertical thermal profile of the fluid contained in the tank, particularly when the interface region is near the bottom or the top of the tank.

A variant of the described thermocline tank is the mixed-media thermocline tank, in which the tank is filled not only with the thermal fluid, but also with some kind of solid material. The solid material contributes to the total thermal capacitance of the system, and is normally cheaper than the thermal fluid. Besides it helps inhibiting convective mass transfer between the cold and hot fluids, making the thermocline more effective than in the case of a single media storage tank.

However, some issues arise related to the use of a mixed fluid-solid storage media, and these include:
(a) The compatibility and long-term physical/chemical stability of the solid media in contact with the thermal fluid and subjected to thermal cycling.
(b) The settlement of the solid media on the bottom of the tank as a result of the repeated cycles of operation, resulting in increased stresses in the tank walls near the bottom, and leading to the need of thicker tank walls.

Several patents have already described thermocline storage concepts similar to these, e.g., U.S. Pats. No. 4,124,061 and 5,197,513.

In the present patent application an improved variant of the thermocline storage system is described. In the described solution, a horizontal physical barrier is employed to separate and thermally insulate the two masses of fluid. The physical barrier has an intermediate density between the higher density of the cold fluid and the lower density of the hot fluid, so that it floats in the interface between the two fluids and it travels together with this interface in a vertical direction inside the tank.

Due to this feature, the barrier member travels vertically inside the tank following the interface between the stored hot and cold fluids, naturally achieving a vertical position coincident with that of said interface.

Considering as an example the typical daily working cycle of the storage system of a solar thermal power plant, at the first hour in the morning the single storage tank considered in this invention is full of colder fluid, maybe with just a minimum heel of hotter fluid left on the top, and the barrier member is near the top of the tank.

During the day, as thermal energy is collected from the solar field, colder fluid is extracted from the tank, at the same time that hotter fluid is introduced into the tank. As the quantity of hotter fluid in the tank increases and the quantity of colder fluid decreases, the interface region between the hotter and colder fluids moves vertically towards the bottom of the tank, with the barrier member following it. In this way, at some point during the thermal energy collection period from the solar field, the storage tank is full of hotter fluid, maybe with a minimum heel of colder fluid left at the bottom of the tank, and the physical barrier is near the bottom of the tank.

The trip of the barrier from its highest position in the tank to its lowest position takes place in the charging period of the tank. The discharging period, which completes the whole typical daily cycle of the tank, occurs in a similar way, with hotter fluid being extracted from the top of the tank and colder fluid being introduced to the bottom of the tank, and with the barrier moving vertically from the bottom of the tank up to the upper part of the tank.

The use of a physical barrier between the two masses of fluid prevents the mass transfer between the two regions and greatly reduces conductive heat transmission between them, thus significantly improving the performance of the thermocline. At the same time, it avoids the disadvantages related to the use of a mixed-media storage solution.

The general arrangement of the physical barrier consists of an outer, fluid tight shell, and an insulating material, which is placed inside the mentioned shell. The concept of the physical barrier separating the two masses of fluid was already described in U.S. Pat. No. 4,523,629. In said patent, a particular embodiment of the barrier, suitable for application in the storage of water between 37,8°C (100°F) and 79,4°C (75°F), is illustrated. The patent also mentions the possible application of the invention in solar power plant storage systems, but no specific configuration for this application is disclosed.

However, it must be noted that there are several problems that affect the physical barrier, and that must be tackled in order to produce a feasible and reliable design of it. These problems are not critical in the conditions of the water storage application described in the aforementioned patent, but become more severe in the more demanding conditions seen in solar power plant energy storage systems, with higher temperatures and temperature differences between the stored fluids.

From the explanation of these problems, it will be understood that a need exists for specific solutions in order to solve or at least alleviate these problems. What this patent intends is precisely to put forth these solutions, which will greatly improve the features of the invention and extend the application scope of it.

In order to make more apparent the problems the physical barrier has to face, some operating conditions for the storage tank, typically seen in real solar power plant storage systems, will be considered as an example.

The particular case considered is the storage of a mixture of molten nitrate salts between 292°C and 386°C, in cylindrical vertical tanks of approximately 15 m in height and 40 m in diameter.

One of the problems affecting the physical barrier belongs to its possible construction materials. The barrier member described in U.S. Pat. No. 4,523,629 consists of a fluid-tight shell, made of some plastics like polycarbonate and Plexiglas®, and some insulating material, like urethane foam or fiberglass, encapsulated into this shell. As stated in that patent, the functions of the shell in the described barrier member are to prevent water absorption and to provide structural stiffness to maintain the predetermined configuration of the barrier member.

However, temperature ranges typically present in solar power plant storage systems, are well above the allowable limits for plastics, so another kind of materials have to be considered for the construction of the barrier.

In addition, for the static pressure values of common solar power plant storage tanks, and considering the huge size of the barrier member necessary for these tanks, it is virtually impossible that the outer shell alone could stand this pressure load, maintaining a nearly constant volume.

As mentioned in U.S. Pat. No. 4,523,629 one constraint the physical barrier needs to fulfill is related to its density: in order to float in the interface of the hot and cold fluids, an adequate combination of materials must be selected for the construction of the barrier, so that an intermediate density between the ones of the hot and cold fluids is achieved. Besides, it is necessary for the barrier to have enough structural strength in order to maintain its volume nearly constant under the full range of static load imposed by the stored fluid.

In said patent, the described way of adjusting the weight of the barrier member consists of adding some exterior weights, so that the desired density is achieved. While this could be an adequate solution for small barriers, in the case of big barriers, it is likely that the necessary weights would be excessively big, becoming quite a nonefficient solution at least for gross-weight adjustments.

Another problem affecting the physical barrier is related to its thermal deformations in service. As a result of having the upper surface of the barrier at the hot temperature and the lower surface at the cold temperature of the stored fluid, an overall state of bending deformation is developed in the barrier, in order to accommodate the differential in thermal expansion between the upper and lower parts of it. For example, a plane disk, made of common carbon steel, 30 cm thick, with a diameter of 40m and with a temperature difference across its thickness of 94 °C, will adopt a spherical deformed shape, and its maximum deflection will be in the order of 0.9 m.

These big deformations decrease the useful height of the storage tank, and in addition, they could lead to structural problems in the barrier. Apart from this, a curved barrier member alters the naturally plane interface between the two stored fluids, and thus, it is likely that fluid will pass from one side to the other of the barrier, so that the natural plane shape of the interface is restored. In this way, much of the insulating capacity of the barrier member is lost.

Economic factors have to be regarded as well in the design of the barrier member, in order to produce a cost effective design. It has to be taken into account that if a single tank with a barrier is more expensive than two tanks, the traditional two-tank option would always be preferable. This means that the choice of materials for the barrier, as well as the fabrication method, is very important in the barrier design. Therefore, it is very important for the materials considered for the barrier to be cheap and widely available.

The barrier member described in this patent application includes design features that provide solutions to all these mentioned problems, and which are outlined throughout the text.

### Summary of the invention

The present invention relates to thermal energy storage tanks, and more specifically to a thermocline storage tank which includes a barrier member that physically separates the two masses of fluid stored at different temperatures.

The barrier member object of the present invention overcomes the formerly mentioned problems, due to a number of design features that enhance its use and extend its applicability to fields and application areas for which no specific design solutions or configurations have been provided so far, e.g. thermal storage in solar power plants.

The storage tank considered for the invention is preferably of the vertical cylindrical type, although any other type of tank can be considered as well within the scope of application of the invention, as long as it has an essentially uniform horizontal or cross section along its entire height or longitudinal axis (i.e., it is of prismatic shape), so that the floating barrier member can freely travel inside the tank along its longitudinal axis.

The barrier member essentially consists of one fluid-tight outer shell, and some filling material(s) which are placed inside the shell. The barrier member has an intermediate density between those of the stored fluid at its different nominal temperatures, so that it floats in the interface between the two masses of stored fluid.

The cross section of the barrier member is preferably of the same shape as the cross section of the tank, so that it effectively covers the contact area between the fluids stored in the tank at different temperatures, and is able at the same time to freely travel along the longitudinal axis of the tank. Thus, in the case of a cylindrical vertical tank, the barrier member would have the form of a disk, of approximately the same diameter as the tank, and with enough thickness to adequately separate and insulate the two masses of stored fluid.

Nevertheless some clearances or gaps between the barrier outer border and the tank shell can be left, in order to account for tolerances or different possible deviations from theoretical shape in manufacturing, or expansions and deformations in service, for example.

Additionally, a number of longitudinal passing holes can be performed in the barrier, with the purpose of serving for piping or instrumentation pass, guiding, etc.

The features of the invention, which make it suitable for use in applications such as thermal energy storage in solar power plants, include:
(a) Providing loose and compression resistant materials as the filler materials for the barrier, which eliminates any problems related to thermal deformations in the filler material and enables the barrier to easily withstand the pressure load of the stored fluid and maintain a nearly constant volume without having to add a complex and costly structure to its outer shell.
(b) Dividing the interior filler material of the barrier into two layers, one of which is an insulation layer and the other a weight adjustment layer, achieving in this way an effective manner of easily adjusting the density of the barrier to the desired value.
(c) Providing the outer shell of the barrier with non planar geometry in one or both of its upper and lower faces, which greatly increases its stiffness and reduces its thermal deformations.
(d) Adding waved or straight circumferential lobes on the outer zone of the barrier shell, so that the connection between the upper and lower faces of the shell is made much more flexible and the thermal deformations and stresses are substantially reduced.
(e) Breaking out the barrier member into a plurality of smaller and independent bodies, arrayed one aside the other to complete a modular barrier, which reduces to a great extent the problems related to thermal deformations, as well as the manufacturing problems, present in a single bigger component.

### Brief description of the drawings

Following it is briefly described some figures that help to better understand the invention. The figures also describe an embodiment of the present invention, as nonlimitative example:
FIGURE 1 is a schematic vertical cross-sectional view of the dual thermal energy storage tank considered in this invention, showing the general arrangement of the two masses of fluid and the barrier member inside the tank.
FIGURE 2 is a vertical cross-sectional view of the barrier object of the present invention, showing several details of it in a first preferred embodiment.
FIGURE 3a shows a horizontal cross-sectional view of the barrier, taken along line 3-3 of FIGURE 2.
FIGURE 3b is a schematic top view of the barrier, showing only an exemplary arrangement of a number of holes in it.
FIGURE 4a represents a vertical view of one half of the barrier member in a second preferred embodiment, with a partial section showing the interior structure and filler material.
FIGURE 4b is a partial vertical view of the outer shell of the barrier, showing an alternative configuration for the contour line of the outer zone of this shell to that represented in FIGURE 4a.
FIGURE 5 is a top view of the barrier member in a third preferred embodiment, showing an exemplary break out of it.
FIGURE 6 is an enlarged view representing an exemplary connection between the different bodies of the barrier shown in FIGURE 5.

### Detailed description of the preferred embodiments

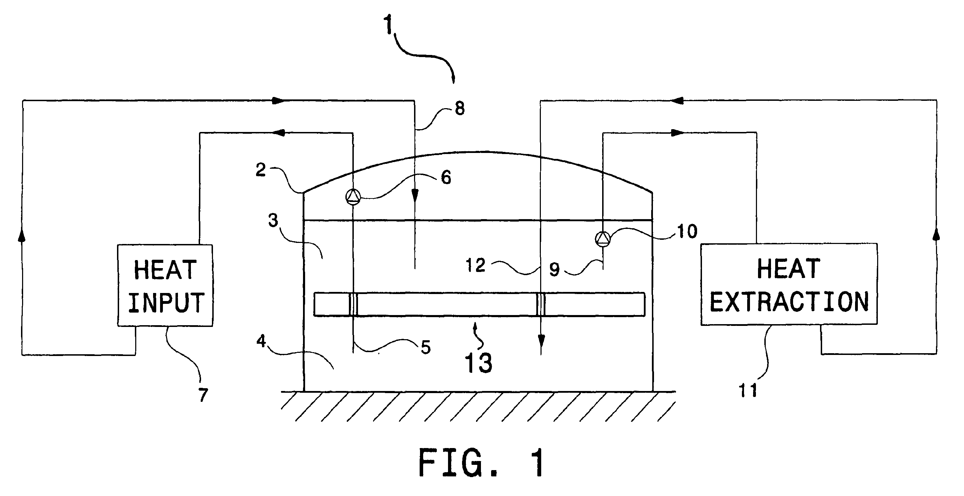

FIG. 1 shows the schematic arrangement of a thermal storage system (1), which can be the storage system of a solar thermal power plant. The storage system (1) includes a thermocline storage tank (2), which stores two masses of fluid at different temperatures. The mass of colder fluid (4) is normally denser than the mass of hotter fluid (3), and is stored below it. The tank can typically be of the vertical cylindrical type, with a diameter of about 40 m and a height of about 15 m. In many common solar applications, the cold fluid will usually be at a temperature of about 300 °C, and the hot fluid will be at a temperature of about 400 °C, and the fluid stored at both temperatures will typically be a mixture of molten nitrate salts.

The barrier member object of the present invention, represented schematically in in FIG. 1 and designated by numeral (13), is located in the interface between the hot and cold fluids, physically separating and insulating them, so that the heat conduction between the two masses of fluid is minimized.

As stated previously, the barrier member essentially consists of an outer fluid tight shell, this shell being essentially of the same shape as the cross section of the tank, and some filling material(s) that are put inside this shell filling its interior space.

The outer shell of the barrier is preferably manufactured in the same material as the tank shell, which would likely be carbon steel for upper operating temperatures below 400-450°C, and stainless steel for upper operating temperatures above this value.

For the particular case being considered, the average thickness of the barrier will be preferably in the order of 0.2-0.4 m in all of the proposed embodiments, so that and adequate insulation between the fluids is achieved, without occupying an excessive space inside the tank.

FIG. 1 also outlines how thermal energy is collected or extracted from the tank. When thermal energy is being collected, cold fluid is extracted from the bottom of the tank via the cold fluid exit line (5), by means of a cold pump (6). The fluid is circulated through a heat input device (7) where it is heated, returning then to the top of the tank via the hot fluid inlet line (8). On the other hand, when thermal energy is being extracted, hot fluid is extracted from the top of the tank via the hot fluid exit line (9), by means of a hot pump (10), which forces it through a heat extraction device (11) where it is cooled, returning then back to the tank via the cold fluid inlet line (12).

The necessary measuring devices can be added both to the barrier member and to the thermocline tank, in order to properly monitor and control the operation of the storage system. The instrumentation of the system can include, for example, an array of vertically disposed thermocouples to obtain the vertical temperature distribution of the tank, and level transmitters, to monitor the total height of the stored fluids, the vertical position of the barrier inside the tank, and the horizontality of the barrier.

Even though the heat input device (7) and the heat extraction device (11) are represented as separate components in FIG. 1, in commercial solar power plants they will usually be the same single device, likely an oil-to-molten salt heat exchanger.

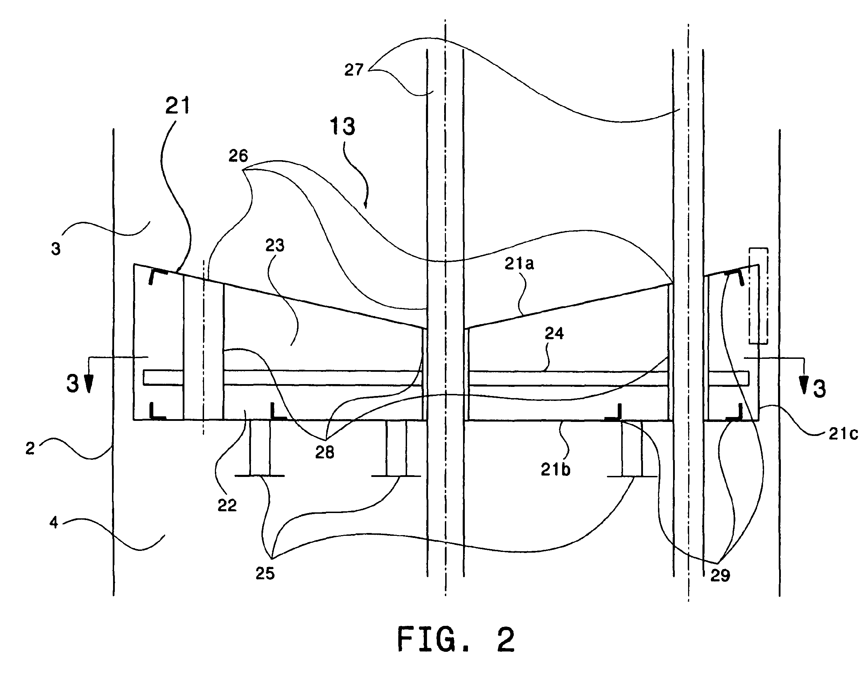

Referring to FIG. 2, the fluid tight outer shell of the barrier (21) essentially comprises a top plate (21a), a bottom plate (21b) and a peripheral vertical closing plate (21 c) connecting the top and bottom plates.

In normal operation, a vertical temperature gradient will be developed across the thickness of the barrier, and the temperatures of the bottom and top plates of the barrier shell will essentially be those of the stored cold and hot fluids respectively. As a result of this temperature distribution, there will be a differential between the thermal expansions of the upper and lower parts of the barrier, and a state of thermal stresses and deformations will be developed in the barrier shell.

While the problem of differential thermal expansion in the filler material is solved due to its granular or small-brick form as will be explained later, this problem still remains for the outer shell of the barrier. Some design features are provided for the barrier in order to solve this problem, which are introduced in different embodiments proposed for the barrier.

In a first embodiment, as can be seen in FIG. 2, the top plate (21a) of the barrier is given a non-planar shape, like for example a conical or a spherical shape (in this case a conical shape is represented). Due to this feature, the stiffness of the barrier shell is greatly increased, and consequently the overall bending of the entire barrier due to the thermal gradient across it is radically reduced.

Even though the tapering of the upper plate (21a) is represented in a pronounced manner in FIG. 2, in practice the necessary tapering will be much less pronounced, and the maximum separation between the upper and lower plates, achieved on the outer border of the barrier, will preferably be on the order of 0.5 m.

Another problem in the outer shell of the barrier are the high stresses present in the vertical closing plate of the shell, as a result of the difference between the upper and lower plate radial expansions it has to accommodate.

This problem is solved in two ways; firstly increasing the vertical distance between both plates in the perimeter, and secondly reducing as much as possible the thickness of the vertical plate (21c), so that the flexibility of this vertical plate is increased. The thickness reduction of the vertical plate has the additional advantage of reducing the heat conduction going through this plate from the hot side to the cold side of the tank.

Figure 2 also depicts the different filler material layers for the barrier, referenced by (22) and (23). As seen in the Figure, the filler material inside the barrier is preferably separated in two different horizontal layers. One of the layers (23) serves for insulation purposes, i.e., gives the barrier its insulating capacity, and being normally lighter than the other layer, is preferably located atop the second layer. The second layer (22) is the density adjustment layer, and its purpose is to adjust the total weight of the barrier so that the final desired density is achieved. Between both layers, a metal foil (24) can be added, so that both filler layers are kept physically separated and any potential mixing between the materials of both layers is prevented.

The materials of both layers have the additional feature of being rigid and compression resistant. In this way, the filler material of the barrier is basically the responsible of withstanding the pressure load of the stored fluid and maintaining a nearly constant volume of the barrier. In this way, the heavy and expensive structure that the outer shell of the barrier would need, if filled with "soft" materials, is avoided.

Furthermore, in order to eliminate the problems related to thermal deformations in the filler materials, the materials of both layers are supplied in granular form or in small single pieces, like bricks for example, and in the construction of the barrier, the filler materials are laid inside the outer shell in loose form, without providing any restriction to the thermal growth between the different pieces. In this way, the problems related to differential thermal expansion that a single big monolithic component would have are avoided, and, additionally, the filling materials can flow in the space inside the barrier, so that all the interior spaces and voids are conveniently filled.

Several kinds of refractory bricks, as well as different types of expanded clay in granular form such as perlite, vermiculite, or arlite; as long as an adequate packing or ramming of the bulk filling material is guaranteed so that no settlement and therefore no significant volume changes occur during operation of the barrier, are believed to be suitable materials for the insulating layer of the barrier. These materials have a low thermal conductivity, adequate stiffness and compression resistance and can operate at temperatures higher than those typically present in solar power plant storage tanks. Besides, they are quite common materials used in construction, and have a reasonably low price.

As for the material of the other layer of the barrier, its most important physical feature, apart from its stiffness and compression resistance, is its density. Sand, cement, and various types of rock can be suitable materials for this layer. Even though it would be desirable to have a single insulating material as the filler for the barrier, it may be that no suitable material which fulfils both the adequate density and low thermal conductivity requirements is available.

Considering, for example, a typical case in which the stored fluid is a mixture of molten nitrate salts between the temperatures of about 300 °C and 400 °C, with densities at the cold and hot temperatures near 1840 and 1900 kg/s respectively, the required density for the filler material of the barrier can very well be in the range of 1000 kg/m³ or higher.

The suitable insulating materials proposed above, however, have density values quite below this range, and it is foreseen that a suitable design of the barrier for a common molten salt storage tank in a solar power plant will have too little weight, if only filled with any of those insulating materials.

In order to solve this situation the filler inside the barrier is divided into two layers, as explained previously. One of the layers has the responsibility of providing its insulating capacity to the barrier, and the other layer provides the necessary gross weight adjustment, so that the desired density for the barrier is achieved.

Additional final weight adjustments may be made to the barrier once it is finished and fully closed, by attaching a number of exterior ballasts to it. These exterior ballasts can be both rigidly attached to the barrier member, or simply laid on it, so that weight can be added or removed from the barrier once it is in operation, to further adjust its weight and density. This can be accomplished, for example, by means of a number of weights, that are placed on the top of the barrier and that can be removed at any time from the top of the tank, in order to replace them with heavier or lighter weights.

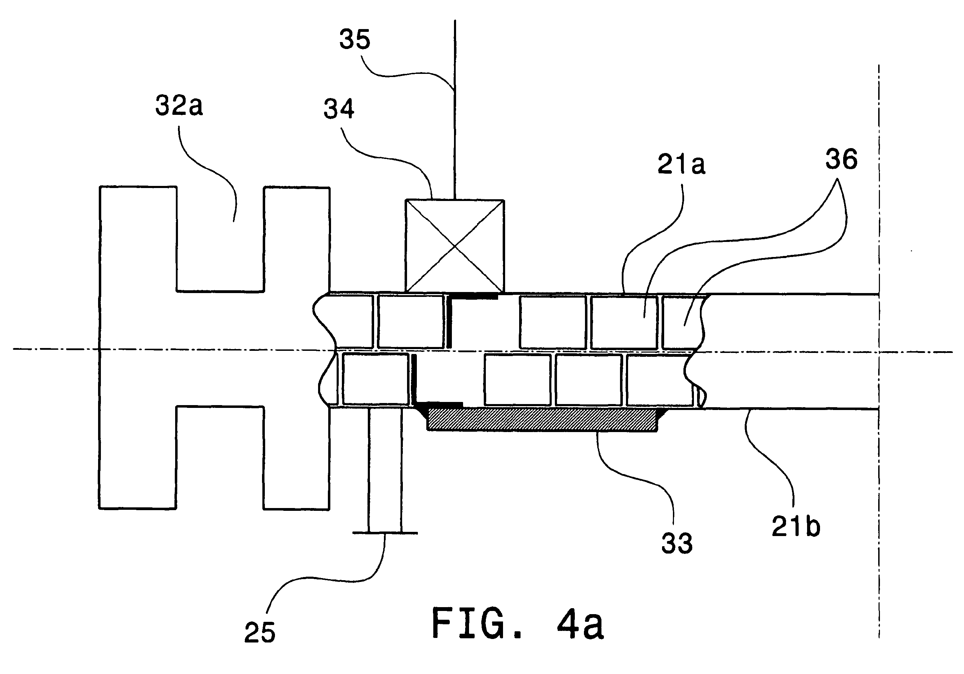

These exterior ballasts are represented in FIG.4a, referenced by numerals (33) and (34). As can be seen in this Figure, ballasts (33) are permanently fixed to the outer shell of the barrier, either to its bottom or to its top plate. Welding is the preferred method of attaching these ballasts to the barrier shell. On the other hand, adjustable ballasts (34) are simply laid on the top face of the barrier, and can be removed and replaced by other lighter or heavier weights at any time, by means of strings (35), which go up to the tank roof and out of the tank through some holes performed in the tank roof. The adjustable ballasts (34) can also be used to properly balance the barrier, if necessary.

Referring again to FIG. 2, some passing holes (26) are preferably added to the barrier. Some vertical closing collars (28) are added for each of the holes, welded to both the top and the bottom plate. These holes can serve for guiding the movement of the barrier inside the tank, which can be accomplished by means of vertical columns (27) engaged into these holes and fixed to the tank.

For the vertical closing collars (28) of the barrier holes (26), it has to be taken into account that they have to accommodate a differential in radial thermal expansion between the upper (21a) and lower (21b) plates of the barrier outer shell (21). For this reason, they are preferably provided in the form of expansion joints or flexible metallic hoses, with a waved contour line (not shown in the Figure) that provide them with enough flexibility to accommodate said differential in thermal expansion between the upper (21 a) and lower (21b) plates of the barrier outer shell (21).

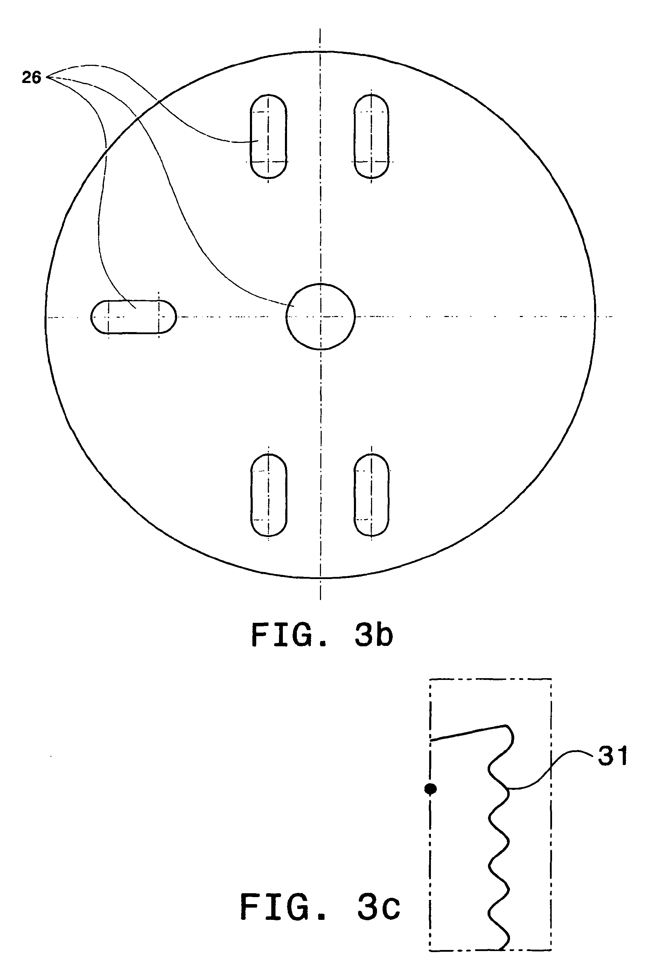

Columns (27) are preferably of tubular section, in order to minimize the heat flux going through these columns from the hot side to the cold side of the tank. Holes (26) can have other additional functions, such as serving for instrumentation, pipelines, etc. passage. FIG. 3b is a top view of the barrier shell, showing only an exemplary arrangement of some holes in the shell. As can be seen in this Figure, holes which are offset from the central axis of the barrier are elongated in the radial direction of the barrier, in order to accommodate its radial expansions.

Some structures of ribs (29), made with standard extruded profiles, are added to both the upper and lower plates of the barrier shell (21). The ribs for the lower plate provide this plate with enough structural strength to withstand the own weight of the barrier before it enters in service. This structure is preferably located above the lower plate (21b), thus inside the barrier shell, having the additional function of dividing the interior space of the shell into separate compartments with the purpose of a better guiding for the placement of the filling materials inside the shell. On the other hand the ribs for the upper plate (21a) increase the stiffness of this plate so that buckling of the plate is avoided.

Additionally, the rib structures of the upper and lower plates have the function of keeping the filler material in the peripheral region of the barrier in close contact with the vertical closing plate, preventing any separation between the filler material and the vertical closing plate that could come as a result of differences between the radial thermal expansions of the outer shell of the barrier and the inner filler material.

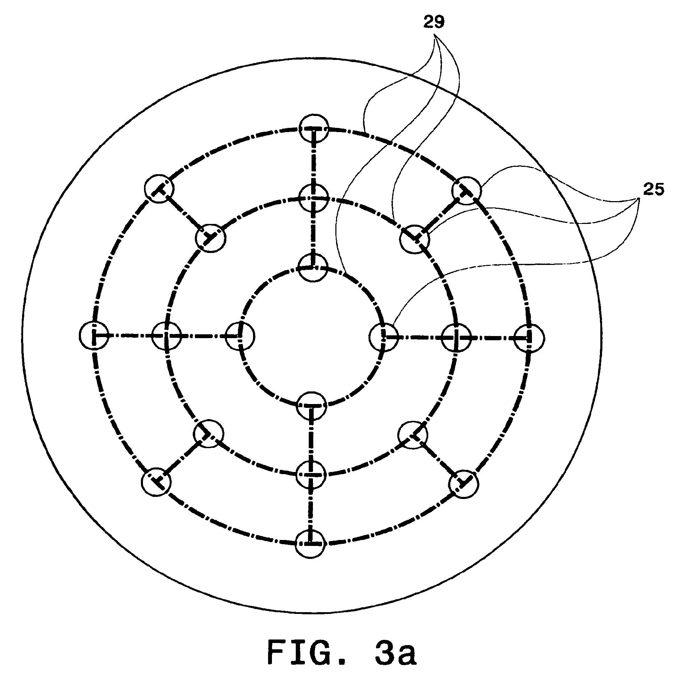

In order to adequately support the barrier before it enters in service, and also in order to limit its downward motion inside the tank once in service, a number of legs, represented schematically by (25), are fixed below the lower plate (21b) of the barrier. FIG. 3a shows an example of a possible arrangement of the ribs (29) and of the fixed legs (25) in the bottom plate (21b).

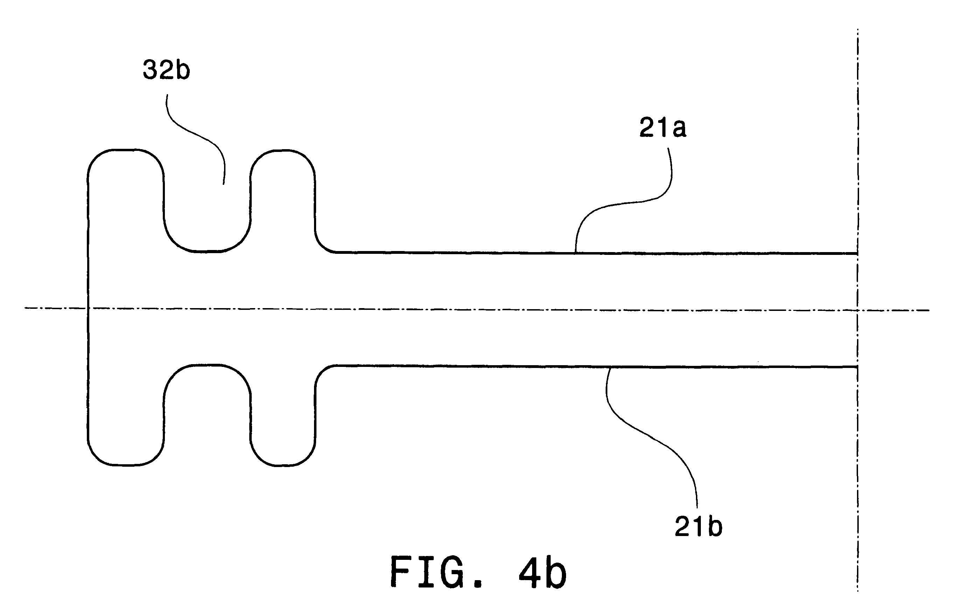

Yet another way of further improving the performance of the outer shell with respect to thermal deformations is presented in FIG. 4b, where a second preferred embodiment for the invention is depicted. As seen in this Figure, some circumferential waved lobes (32b) are implemented in the peripheral region of the barrier. This feature adds flexibility to the coupling between the upper and lower plates of the shell, so that they are partially decoupled from each other. In this way, the connection between the upper and lower plates (21a, 21b) behaves like a flexible joint, thus enabling each of the plates to freely achieve their corresponding expanded dimensions.

In order to make the manufacturing easier said circumferential lobes can be made out of straight sections, like the ones shown in FIG. 4a, referred to as (32a). This Figure also includes a partial section which shows an exemplary arrangement of the filler material inside the barrier as an array of bricks (36) (no distinction between the different layers of the filler material is made in this Figure).

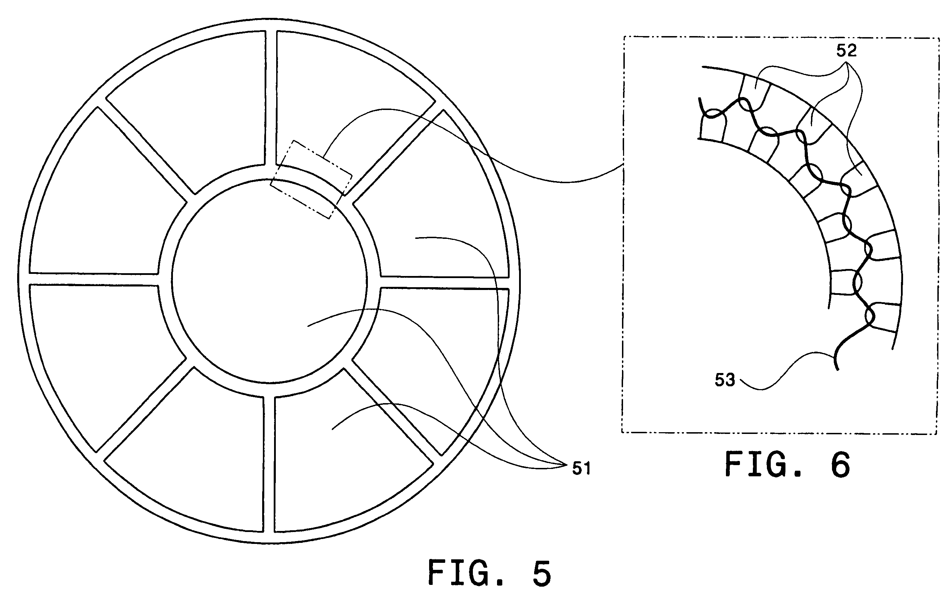

In another configuration of the invention, schematically outlined in FIG. 5, the barrier is divided into a number of separate and independent bodies (51), each of the bodies having its own fluid-tight metal outer shell with its corresponding filling material layers inside. As an example, one way of dividing the barrier could be breaking it into one circular central piece and a number of outer annulus sectors.

The advantages of this configuration come from the fact that the size of each of the independent bodies is reduced, thus considerably reducing the problems related to differential thermal expansions in the barrier. Besides, the construction of the barrier is enhanced due to the modularity of this configuration.

In order to avoid any vertical separation of the different bodies, they are assembled to each other in such way that their cohesion is assured, while some relative freedom is permitted between them, so that each body behaves as an independent piece. This can be accomplished by providing a number of lungs (52) to the outer edges of each body, so that adjacent edges of adjacent bodies can be tied to each other by means of strings or chains (53), or other means of the like.

In the proposed configurations for the barrier shell, a high heat flux is conducted through the vertical closing metal plate (21 c), which has a high thermal conductivity and thermally connect both zones of the tank at different temperatures.

One additional feature can be introduced in the barrier, which seeks to reduce the heat flux going through the vertical plate (21 c). This feature consists of giving a curved shape to the vertical plate's contour line, similar to that shown in FIG. 3c, instead of a straight shape. As schematically shown in this Figure, a corrugated shape is given to this plate, performing a number of vertical lobes (31) on it. By doing so, the conduction path through the metal is constrained, and the heat flux crossing this path is significantly reduced.

Many of the features described here are implemented for different embodiments of the barrier. Nevertheless, many combinations of them can be implemented for a single barrier. For example, the waved shape of the barrier outer shell near its outer perimeter as well as the non-planar geometry for any or both of the upper and lower plates (21a, 21b) of the barrier shell, can be added at the same time to the barrier.

## Claims

1. Dual thermal energy storage tank comprising a barrier (13) which floats in the interface of two masses of fluid stored at different temperatures, due to the difference in densities between said masses of fluid, and where said barrier (13) has an intermediate density between those of the stored fluids at its different nominal temperatures,
said barrier (13) comprising, at least,
a fluid-tight outer shell (21) and
a filler material inside the fluid-tight outer shell (21), **characterized**
**in that** said filler material is made of rigid and compression resistant material, and laid inside the outer shell (21) in loose form, allowing thermal expansion to the different elements without any restriction.

2. Dual thermal energy storage tank of claim 1 **characterized in that** the filler material further comprises, at least:
a first horizontal insulating layer (23);
a second horizontal density adjustment layer (22).

3. Dual thermal energy storage tank of claims 1 and 2 **characterized in that** the filler material further comprises a separating layer (24) between the first and second horizontal layers (23,22).

4. Dual thermal energy storage tank of claims 1, 2 and 3 **characterized in that** the fluid-tight outer shell (21) is made in the same construction material of the tank shell and **in that** said material is carbon steel for upper operating temperatures below 400°C - 450°C and stainless steel for upper operating values above 400°C - 450°C.

5. Dual thermal energy storage tank of claims 1 to 4 **characterized in that** the materials of the first and second horizontal layers (23,22) are supplied in granular form or in small single pieces.

6. Dual thermal energy storage tank of claims 1 to 5 **characterized in that** the barrier (13) further comprises a plurality of external ballasts (33,34) in order to provide additional weight adjustments or to balance the barrier (13).

7. Dual thermal energy storage tank of claim 6 **characterized in that** the external ballasts (33,34) are at least one, selected from:
external adjustable ballasts (34);
external non-adjustable ballasts (33).

8. Dual thermal energy storage tank of claims 1 to 7 **characterized in that** the fluid-tight outer shell (21) of the barrier (13) consists of a single body comprising:
a first upper plate (21a);
a second bottom plate (21b);
a third vertical plate (21c) closing the peripheral space between the first and second plates (21 a,21 b)

9. Dual thermal energy storage tank of claim 8 **characterized in that** at least one of said first upper plate (21a) and second bottom plate (21b) have non-planar geometry.

10. Dual thermal energy storage tank of claim 9 **characterized in that** said non-planar geometry is, at least one, selected from:
conical geometry;
polygonal geometry;
spherical geometry.

11. Dual thermal energy storage tank of claim 8 **characterized in that** the third vertical plate (21c) has a waved or corrugated shape for the circumferential cross-sectional contour line of the plate.

12. Dual thermal energy storage tank of claims 1 to 11, **characterized in that** the circumferential cross-sectional contour line of the barrier outer shell (21) has a number of waved or straight lobes (31) near its outer perimeter, in order to increase the flexibility in the connection between the upper (21a) and lower (21b) plates of the barrier shell (21) and consequently reduce the thermal deformation of the barrier shell (21).

13. Dual thermal energy storage tank of claims 1 to 12 **characterized in that** said barrier (13) is divided into a plurality of separate and independent bodies (51), each of the bodies (51) comprising:
a fluid-tight outer shell (21); and
a filler material inside the fluid-tight outer shell (21);
and **in that** said filler material is made of rigid and compression resistant materials, and laid inside the outer shell (21) in loose form, allowing thermal expansion to the different elements without any restriction.

14. Dual thermal energy storage tank of claim 13 **characterized in that** the different bodies (51) of the barrier (13) are assembled to each other, in such way that their cohesion is assured while relative freedom is allowed between them, due to the strings or chains (53) that assemble adjacent bodies (51).

15. Dual thermal energy storage tank of claims 1 to 14 **characterized in that** the barrier (13) further comprises at least one horizontal passing hole (26).

16. Dual thermal energy storage tank of claim 15 **characterized in that** at least one closing collar (28) for the barrier passing holes (26) are provided in the form of expansion joints or flexible metallic hoses, in order to have enough flexibility to adequately accommodate the difference in thermal expansions between the upper and lower plates (21a,21b) of the barrier shell (21).

17. Dual thermal energy storage tank of claim 15 **characterized in that** at least one hole is engaged to one column (27) fixed to the tank (2).

18. Dual thermal energy storage tank of claim 17 **characterized in that** said column (27) has a tubular section in order to minimize heat conduction through it and to permit its use for other purposes, such as instrumentation pass or fluid conduction.

19. Dual thermal energy storage tank of claims 1 to 18 **characterized in that** the barrier (13) also comprises a plurality of ribs (29) attached to both the upper and lower plates (21a,21b) of the fluid-tight outer shell (21), in order to provide structural strength.

20. Dual thermal energy storage tank of claims 1 to 19 **characterized in that** a number of legs (25) are added to the barrier (13), in order to support its weight and to limit its downward motion inside the tank (2).

## Patentansprüche

1. Zweifacher Wärmeenergiespeichertank, umfassend eine Sperre (13), die in der Schnittstelle von zwei Fluidmassen treibt, welche aufgrund des Unterschieds in der Dichte der Fluidmassen auf unterschiedlichen Temperaturen gespeichert sind, und wobei die Sperre (13) eine Dichte aufweist, die zwischen den Dichten der gespeicherten Fluide auf ihren verschiedenen Nenntemperaturen liegt,
wobei die Sperre (13) zumindest Folgendes umfasst:
eine fluiddichte Außenhülle (21) und
ein Füllmaterial innerhalb der fluiddichten Außenhülle (21), **dadurch gekennzeichnet,**
**dass** das Füllmaterial aus starrem und druckfestem Material hergestellt und lose innerhalb der Außenhülle (21) angeordnet ist, wodurch eine Wärmeausdehnung der verschiedenen Elemente ohne jegliche Einschränkung ermöglicht ist.

2. Zweifacher Wärmeenergiespeichertank nach Anspruch 1, **dadurch gekennzeichnet, dass** das Füllmaterial ferner zumindest Folgendes umfasst:
eine erste horizontale Isolierschicht (23);
eine zweite horizontale Dichteanpassungsschicht (22).

3. Zweifacher Wärmeenergiespeichertank nach einem der Ansprüche 1 oder 2, **dadurch gekennzeichnet, dass** das Füllmaterial ferner eine Trennschicht (24) zwischen der ersten und zweiten horizontalen Schicht (23, 22) umfasst.

4. Zweifacher Wärmeenergiespeichertank nach einem der Ansprüche 1, 2 oder 3, **dadurch gekennzeichnet, dass** die fluiddichte Außenhülle (21) aus demselben Baumaterial wie die Tankhülle hergestellt ist, und dass das Material Kohlenstoffstahl für obere Betriebstemperaturen unter 400 °C bis 450 °C und Edelstahl für obere Betriebswerte über 450 °C bis 450 °C ist.

5. Zweifacher Wärmeenergiespeichertank nach einem der Ansprüche 1 bis 4, **dadurch gekennzeichnet, dass** die Materialien der ersten und zweiten horizontalen Schicht (23, 22) körnig oder in kleinen Einzelstücken zugeführt sind.

6. Zweifacher Wärmeenergiespeichertank nach einem der Ansprüche 1 bis 5, **dadurch gekennzeichnet, dass** die Sperre (13) ferner mehrere Außenballaste (33, 34) umfasst, um zusätzliche Gewichtsanpassungen vorzusehnen oder die Sperre (13) auszubalancieren.

7. Zweifacher Wärmeenergiespeichertank nach Anspruch 6, **dadurch gekennzeichnet, dass** zumindest einer der Außenballaste (33, 34) aus Folgendem ausgewählt ist:
äußere anpassbare Ballaste (34);
äußere nichtanpassbare Ballaste (33).

8. Zweifacher Wärmeenergiespeichertank nach einem der Ansprüche 1 bis 7, **dadurch gekennzeichnet, dass** die fluiddichte Außenhülle (21) der Sperre (13) aus einem einzelnen Körper besteht, der Folgendes umfasst:
eine erste obere Platte (21 a);
eine zweite Bodenplatte (21 b);
eine dritte vertikale Platte (21 c), die den umfänglichen Raum zwischen der ersten und zweiten Platte (21 a, 21 b) schließt.

9. Zweifacher Wärmeenergiespeichertank nach Anspruch 8, **dadurch gekennzeichnet, dass** zumindest eine der ersten oberen Platte (21 a) und zweiten Bodenplatte (21 b) eine nicht planare Geometrie aufweist.

10. Zweifacher Wärmeenergiespeichertank nach Anspruch 9, **dadurch gekennzeichnet, dass** zumindest eine der nicht planaren Geometrien aus Folgendem ausgewählt ist:
kegelförmige Geometrie;
mehrkantige Geometrie;
kugelförmige Geometrie.

11. Zweifacher Wärmeenergiespeichertank nach Anspruch 8, **dadurch gekennzeichnet, dass** die dritte vertikale Platte (21c) eine gewellte oder gerippte Form für die umfängliche Querschnittskonturlinie der Platte aufweist.

12. Zweifacher Wärmeenergiespeichertank nach einem der Ansprüche 1 bis 11, **dadurch gekennzeichnet, dass** die umfängliche Querschnittskonturlinie der äußeren Sperrenhülle (21) eine Anzahl gewellter oder gerader Nocken (31) in der Nähe ihres Außenumfangs aufweist, um die Flexibilität der Verbindung zwischen der oberen (21 a) und unteren (21 b) Platte der Sperrenhülle (21) zu erhöhen und infolgedessen die thermische Verformung der Sperrenhülle (21) zu verringern.

13. Zweifacher Wärmeenergiespeichertank nach einem der Ansprüche 1 bis 12, **dadurch gekennzeichnet, dass** die Sperre (13) in mehrere separate und unabhängige Körper (51) aufgeteilt ist, wobei jeder der Körper (51) Folgendes umfasst:
eine fluiddichte Außenhülle (21); und
ein Füllmaterial innerhalb der fluiddichten Außenhülle (21);
und dass das Füllmaterial aus starren und druckfesten Materialien hergestellt und lose innerhalb der Außenhülle (21) angeordnet ist, wodurch eine Wärmeausdehnung der verschiedenen Elemente ohne jegliche Einschränkung ermöglicht ist.

14. Zweifacher Wärmeenergiespeichertank nach Anspruch 13, **dadurch gekennzeichnet, dass** die verschiedenen Körper (51) der Sperre (13) derart aneinandergefügt sind, dass ihre Kohäsion gewährleistet ist, während aufgrund der Leinen oder Ketten (53), die benachbarte Körper (51) aneinanderfügen, eine relative Freiheit zwischen ihnen zugelassen ist.

15. Zweifacher Wärmeenergiespeichertank nach einem der Ansprüche 1 bis 14, **dadurch gekennzeichnet, dass** die Sperre (13) ferner zumindest ein horizontales Durchgangsloch (26) umfasst.

16. Zweifacher Wärmeenergiespeichertank nach Anspruch 15, **dadurch gekennzeichnet, dass** zumindest ein Verschlussring (29) für die Sperrendurchgangslöcher (26) in Form von Dehnungsbändern oder flexiblen Metallschläuchen vorgesehen ist, um genügende Flexibilität zum angemessenen Aufnehmen des Wärmeausdehnungsunterschieds zwischen der oberen und unteren Platte (21 a, 21b) der Sperrenhülle (21) aufzuweisen.

17. Zweifacher Wärmeenergiespeichertank nach Anspruch 15, **dadurch gekennzeichnet, dass** zumindest ein Loch mit einer Säule (27) in Eingriff gebracht ist, die an dem Tank (2) befestigt ist.

18. Zweifacher Wärmeenergiespeichertank nach Anspruch 17, **dadurch gekennzeichnet, dass** die Säule (27) einen röhrenförmigen Schnitt aufweist, um die Wärmeleitung dort hindurch zu minimieren und die Benutzung für andere Zwecke zu ermöglichen, wie etwa Messdurchführung oder Fluidleitung.

19. Zweifacher Wärmeenergiespeichertank nach einem der Ansprüche 1 bis 18, **dadurch gekennzeichnet, dass** die Sperre (13) außerdem mehrere Rippen (29) umfasst, die sowohl an der oberen als auch der unteren Platte (21 a, 21 b) der fluiddichten Außenhülle (21) angebracht sind, um strukturelle Festigkeit vorzusehen.

20. Zweifacher Wärmeenergiespeichertank nach einem der Ansprüche 1 bis 19, **dadurch gekennzeichnet, dass** der Sperre (13) eine Anzahl Füße (25) angefügt ist, um ihr Gewicht zu stützen und ihre Abwärtsbewegung in den Tank (2) zu begrenzen.

## Revendications

1. Un réservoir de stockage de biénergie thermique comprenant une barre (13) qui flotte sur la surface de deux masses de fluide stockées à différentes températures, en raison de la différence des densités de ces masses de fluide, dans lequel cette barre (13) a une densité intermédiaire entre celles des fluides stockés à ses différentes températures nominales,
cette barre (13) comprenant au moins,
une coque externe étanche (21) et
un matériau de remplissage à l'intérieur de la coque externe étanche (21), **caractérisé**
**en ce que** ce matériau de remplissage est un matériau rigide résistant à la compression et s'étend à l'intérieur de la coque externe (21) de manière irrégulière, permettant l'expansion thermique des différents éléments sans aucune limitation.

2. Le réservoir de stockage de biénergie thermique selon la revendication 1 **caractérisé en ce que** le matériau de remplissage comprend également, au moins :
une première couche horizontale isolante (23) ;
une deuxième couche horizontale d'ajustement de la densité (22).

3. Le réservoir de stockage de biénergie thermique selon les revendications 1 et 2 **caractérisé en ce que** le matériau de remplissage comprend également une couche de séparation (24) entre les première et deuxième couches horizontales (23, 22).

4. Le réservoir de stockage de biénergie thermique selon les revendications 1, 2 et 3 **caractérisé en ce que** la coque extérieure étanche (21) est fabriquée dans le même matériau que la coque du réservoir et que ce matériau est de l'acier au carbone pour des températures maximales de fonctionnement inférieures à 400° C - 450° C et en acier inoxydable pour des températures maximales de fonctionnement supérieures à 400 ° C - 450 °C.

5. Le réservoir de stockage de biénérgie thermique selon les revendications 1 à 4 **caractérisé en ce que** les matériaux des première et deuxième couches horizontales (23, 22) sont fournies sous forme granulaire ou en petits morceaux.

6. Le réservoir de stockage de biénergie thermique selon les revendications 1 à 5 **caractérisé en ce que** la barre (13) comprend également plusieurs lests externes (33, 34) destinés réaliser des ajustements de poids supplémentaires ou à équilibrer la barre (13).

7. Le réservoir de stockage de biénergie thermique selon la revendication 6 **caractérisé en ce que** les lests externes (33, 34) sont au moins un de ceux ci-dessous :
des lests externes ajustables (34) ;
des lests externes non-ajustables (33).

8. Le réservoir de stockage de biénergie thermique selon les revendications 1 à 7 **caractérisé en ce que** la coque étanche extérieure (21) de la barre (13) consiste en un corps unique comprenant :
Une première plaque supérieure (21a) ;
Une deuxième plaque inférieure (21b) ;
Une troisième plaque verticale (21c) fermant la zone périphérique entre la première et la deuxième plaque (21 a, 21 b).

9. Le réservoir de stockage de biénergie thermique selon la revendication 8 **caractérisé en ce qu'**au moins une des première plaque supérieure (21a) et deuxième plaque inférieure (21 b) a une géométrie non-plane.

10. Le réservoir de stockage de biénergie thermique selon la revendication 9 **caractérisé en ce que** cette géométrie non-plane est au moins l'une des suivantes :
géométrie conique ;
géométrie polygonale ;
géométrie sphérique.

11. Le réservoir de stockage de biénergie thermique selon la revendication 8 **caractérisé en ce que** la troisième plaque verticale (21 c) a une forme ondulée ou bosselée pour la ligne de contour circonférentielle de la plaque.

12. Le réservoir de stockage de biénergie thermique selon les revendications 1 à 11 **caractérisé en ce que** la ligne de contour circonférentielle de la coque extérieure de la barre (21) est dotée d'un nombre de lobes ondulés ou droits (31) près de son périmètre extérieur, dans le but d'augmenter la flexibilité du raccord entre les plaques supérieure (21a) et inférieure (21 b) de la coque de la barre (21) et de réduire ainsi la déformation thermique de la coque de la barre (21).

13. Le réservoir de stockage de biénergie thermique selon les revendications 1 à 12 **caractérisé en ce que** cette barre (13) est divisée en plusieurs corps séparés et indépendants (51), chacun de ces corps comprenant:
une coque extérieure étanche (21) ; et
un matériau de remplissage à l'intérieur de cette coque extérieure étanche (21) ;
et **en ce que** ce matériau de remplissage est constitué de matériaux rigides résistants à la compression et s'étend à l'intérieur de la coque externe (21) de manière irrégulière, permettant l'expansion thermique des différents éléments sans aucune limitation.

14. Le réservoir de stockage de biénergie thermique selon la revendication 13 **caractérisé en ce que** les différents corps (51) de la barre (13) sont assemblés les uns aux autres de sorte que leur cohésion est assurée tout en permettant une liberté relative entre ces derniers, grâce à des fils ou chaînes (53) qui assemblent les corps adjacents (51).

15. Le réservoir de stockage de biénergie thermique selon les revendications 1 à 14 **caractérisé en ce que** la barre (13) comprend également au moins un trou passant horizontal (26).

16. Le réservoir de stockage de biénergie thermique selon la revendication 15 **caractérisé en ce qu'**au moins une bague de fermeture (28) pour les trous passants de la barre (26) est fournie sous forme de joints d'expansion ou de tuyaux flexibles en métal, afin d'obtenir la flexibilité suffisante pour accueillir de manière adéquate la différence des expansions thermiques entre les plaque supérieure et inférieure (21 a, 21 b) de la coque de la barre (21).

17. Le réservoir de stockage de biénergie thermique selon la revendication 15 **caractérisé en ce qu'**au moins un trou est engagé dans une colonne (27) fixée au réservoir (2).

18. Le réservoir de stockage de biénergie thermique selon la revendication 17 **caractérisé en ce que** cette colonne (27) a une coupe tubulaire afin de minimiser la conduction de la chaleur et pour permettre son utilisation dans d'autres finalités, telles que le passage d'appareils de mesure ou la conduction d'un fluide.

19. Le réservoir de stockage de biénergie thermique selon les revendications 1 à 18 **caractérisé en ce que** la barre (13) comprend également plusieurs nervures (29) fixées aux plaques supérieure et inférieure (21 a, 21 b) de la coque extérieure étanche (21), visant à consolider la structure.

20. Le réservoir de stockage de biénergie thermique selon les revendications 1 à 19 **caractérisé en ce que** des pattes (25) sont ajoutées à la barre (13) pour supporter son poids et pour limiter son mouvement descendant à l'intérieur du réservoir (2).
